# EUROPEAN PATENT SPECIFICATION

(11) **EP 1 941 724 B1**
(45) Date of publication and mention of the grant of the patent: **20.11.2013**
(21) Application number: 06808937.4
(22) Date of filing: 03.10.2006
(51) Int. Cl.: H04N 7/088

(54) **NOTIFICATION AS A SERVICE OR AS AN ACCESS TO A SERVICE**
BENACHRICHTIGUNG ALS EIN DIENST ODER ALS EIN ZUGANG ZU EINEM DIENST
NOTIFICATION UTILISEE COMME SERVICE OU COMME ACCES DE SERVICE

(30) Priority: 07.10.2005 US 724275 P
(43) Date of publication of application: 09.07.2008
(73) Proprietor: Nokia Corporation, 02150 Espoo (FI)
(72) Inventor: PAILA, Toni, Rye, NY 10580 (US); POHJOLAINEN, Topi, FIN-00120 Helsinki (FI)
(74) Representative: Anderson, Oliver Ben
(86) International application number: PCT/IB2006/002751
(87) International publication number: WO 2007/042886

(56) References cited:
- WO-A1-2004/056096
- US-A1- 2006 053 450
- OPEN MOBILE ALLIANCE: "Modification of SGDD for Notification Function" OMA-BCAST-2005-0412, [Online] 7 September 2005 (2005-09-07), XP002528969 Retrieved from the Internet: URL:http://member.openmobilealliance.org/f tp/Public_documents/bcast/2005/> [retrieved on 2009-05-20]
- OPEN MOBILE ALLIANCE: "Notification Section for TS Service Guide" OMA-BCAST-2005-0413, [Online] 7 September 2005 (2005-09-07), XP002528970 Retrieved from the Internet: URL:http://member.openmobilealliance.org/f tp/Public_documents/bcast/2005/> [retrieved on 2009-05-20]
- OPEN MOBILE ALLIANCE: "Service Guide for Mobile Broadcast Services OMA-TS-BCAST_ServiceGuide-V1_0_0-20050902- D"[Online] 2 September 2005 (2005-09-02), XP002528971 Retrieved from the Internet: URL:http://member.openmobilealliance.org/f tp/Public_documents/bcast/Permanent_docume nts/> [retrieved on 2009-05-20]
- 'Service Guide for Mobile Broadcast Services' DRAFT VERSION 1.0, [Online] 30 September 2005, XP003011345 Retrieved from the Internet: <URL:http://www.member.openmobilealliance.o rg/ftp/Public_documents/BCAST/Permanent_doc uments>
- 'Service Guide for Mobile Broadcast Services' DRAFT VERSION 1.0, [Online] 24 March 2006, XP003011346 Retrieved from the Internet: <URL:http://www.member.openmobilealliance.o rg/ftp/Public_documents/BCAST/Permanent_doc uments>

## Description

### RELATED APPLICATIONS

This application claims the benefit of U.S. Provisional Application No. 60/724,275, which was filed October 7, 2005.

### FIELD

Embodiments of the invention relate generally to communications networks. More specifically, embodiments of the invention are related to providing notification in a service guide of events or changes in events.

### BACKGROUND

Generally, an Electronic Service Guide (ESG) enables a terminal to communicate what services are available to end users and how the services may be accessed. ESG fragments are independently existing pieces of the ESG. Traditionally, ESG fragments comprise XML documents, but more recently they have encompassed a vast array of items, such as for example, a SDP (Session Description Protocol) description, textual file, or an image. The ESG fragments describe one or several aspects of currently available (or future) service or broadcast programs. Such aspects may include for example: free text description, schedule, geographical availability, price, purchase method, genre, and supplementary information such as preview images or clips. Audio, video and other types of data comprising the ESG fragments may be transmitted through a variety of types of networks according to many different protocols. For example, data can be transmitted through a collection of networks usually referred to as the "Internet" using protocols of the Internet protocol suite, such as Internet Protocol (IP) and User Datagram Protocol (UDP). Data is often transmitted through the Internet addressed to a single user. It can, however, be addressed to a group of users, commonly known as multicasting. In the case in which the data is addressed to all users it is called broadcasting. The ESG data may be transmitted using different types of wireless digital networks including digital broadband broadcast and/or multicast networks.
A service provider provides information on current or future services or content by transmission of ESG fragments, which correspond to an event, in a data stream to a subscriber terminal. However, over time, changes may be made to the event by the service provider. For example, the service provider may alter the corresponding service guide or parts thereof, change the service schedule, or promote a specific broadcast service. In addition, the service provider may wish to broadcast specific notification of updated data. Users or groups of users often have a need to be notified of such information or changes to currently supplied information.
Thus, there exists a need for a method and system for notification to a user or group of users of upcoming events, changes in currently provided events, or on-going or updated information.
Draft version 1.0 of Service Guide for Mobile Broadcast Services of Open Mobile Alliance (OMA-TS-BCAST_ServiceGuide-V1_0_0-20050902-D) provides the service guide data model for transmitting the information related to the scheduled content on a broadcast/multicast network. "Modification of SGDD for Notification Function" (OMA-BCAST-2005-0412) provides a proposal for the realization of the notifications in the Mobile Broadcast Services Standard.

### BRIEF SUMMARY

The invention is defined by the claims.
The following presents a simplified summary in order to provide a basic understanding of some aspects of the apparatuses and methods described herein.
In one example, a transmitter is provided for transmitting an ESG fragment containing information on a notification. For example, the transmitter may transmit an ESG fragment containing a parameter describing the notification. In one example, the ESG fragment transmitted by the transmitter contains a notification reception parameter for describing the reception information of the notification information or messages. This parameter may further include an identification of a port number for receipt of the ESG fragment at a receiver.
In another example, the ESG fragment transmitted by the transmitter includes a notification services parameter for indicating the notification as the corresponding service. For example, a type parameter of a service fragment (e.g., a service fragment type parameter) may be included in the ESG fragment. Depending on the value of the service fragment type parameter, the service fragment may be instantiated as a notification service.

In another example, the ESG fragment transmitted by the transmitter includes a notification component parameter. For example, a type parameter of an access fragment (e.g., an access fragment type parameter) maybe included in the ESG fragment. Depending on the value of the access fragment type parameter, a component of the service may be declared as a notification.

In another example, a receiver is provided for receiving an ESG fragment. The ESG fragment may be parsed to determine corresponding notification services, notification components or notification reception information.

In another example, a method is provided for creating an ESG fragment associated with a notification for a user. The ESG fragment may include parameters for describing the notification including, for example, notification services, notification components of a service and/or notification reception information.

Also provided is a computer-readable medium for creating, transmitting and receiving an ESG fragment associated with a notification service or notification component of a service.

### BRIEF DESCRIPTION OF THE DRAWINGS

A more complete understanding of various embodiments of the invention and the advantages thereof may be acquired by referring to the following description in consideration of the accompanying drawings, in which like reference numbers indicate like features, and wherein:

FIG. 1 illustrates a block diagram of a wireless communication system in which various aspects of the present invention may be implemented.

FIG. 2 illustrates a suitable digital broadcast receiver in which one or more illustrative embodiments of the invention may be implemented.

FIG. 3 illustrates a schematic diagram of an example of a transport object in which one or more illustrative embodiments of the invention may be implemented.

FIG. 4 illustrates examples of transporting single transport objects in which one or more illustrative embodiments of the invention may be implemented.

FIG. 5 illustrates an example of a receiver in which one or more illustrative embodiments of the invention may be implemented.

FIG. 6 illustrates an example of a transmitter in which one or more illustrative embodiments of the invention may be implemented.

FIG. 7 illustrates a flow chart of an example of transmitting an ESG fragment corresponding to a notification service or notification component of a service in which one or more illustrative embodiments of the invention may be implemented.

FIG. 8 illustrates a flow chart of an example of receiving an ESG fragment corresponding to a notification service or notification component of a service in which one or more illustrative embodiments of the invention may be implemented

### DETAILED DESCRIPTION

In the following description of the various embodiments, reference is made to the accompanying drawings, which form a part hereof, and in which is shown by way of illustration various embodiments in which the invention may be practiced. It is to be understood that other embodiments may be utilized and structural and functional modifications may be made.

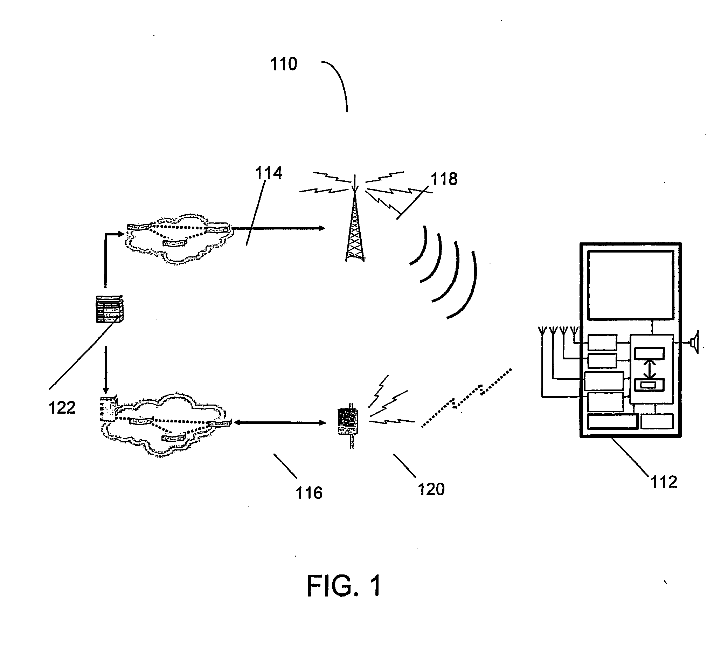

Aspects of the invention may be utilized across a broad array of networks and communication protocols. FIG. 1 illustrates an example of a wireless communication system 110 in which the systems and methods of the invention may be employed. One or more network-enabled mobile devices 112, such as a personal digital assistant (PDA), cellular telephone, mobile terminal, personal video recorder, portable television, personal computer, digital camera, digital camcorder, portable audio device, portable radio, or combinations thereof, are in communication with a service source 122 through a broadcast network 114 and/or cellular network 116. The mobile terminal/device 112 may comprise a digital broadband broadcast receiver device. The service source 122 may be connected to several service providers that may provide their actual program content or information or description of their services and programs to the service source that further provides the content or information to the mobile device 112. The several service providers may include but are not limited to one or more television and/or digital television service providers, AM/FM radio service providers, SMS/MMS push service providers, Internet content or access providers.

One way of broadcasting data is to use an IP datacasting (IPDC) network. IPDC is a combination of digital broadcast and Internet Protocol. Through such an IP-based broadcasting network, one or more service providers can supply different types of IP services including on-line newspapers, radio, and television. These IP services are organized into one or more media streams in the form of audio, video and/or other types of data. To determine when and where these streams occur, users refer to an electronic service guide (ESG). One example used in digital video broadcasting (DVB) streams is an electronic program guide (EPG). One type of DVB is Digital video broadcasting-handheld (DVB-H), a recently developed technology that increases the capabilities and services available on small handheld devices, such as mobile telephones. The DVB-H is designed to deliver 10 Mbps of data to a battery-powered terminal device.

DVB transport streams deliver compressed audio and video and data to a user via third party delivery networks. Moving Picture Expert Group (MPEG) is a technology by which encoded video, audio, and data within a single program is multiplexed, with other programs, into a transport stream (TS). The TS is a packetized data stream, with fixed length packets, including a header. The individual elements of a program, audio and video, are each carried within packets having a unique packet identification (PID). To enable a receiver device to locate the different elements of a particular program within the TS, Program Specific Information (PSI), which is embedded into the TS, is supplied. In addition, additional Service Information (SI), a set of tables adhering to the MPEG private section syntax, may be incorporated into the TS. This enables a receiver device to correctly process the data contained within the TS.

Aspects of the present invention, however, are also applicable to other traditional digital mobile broadcast systems such as, for example, T-DAB, T/S-DMB, ISDB-T, ATSC, MediaFLO, and non-traditional systems such 3GPP MBMS and 3GPP2BCMCS.

The broadcast network 114 may include a radio transmission of IP datacasting over DVB-H. The broadcast network 114 may broadcast a service such as a digital or analog television signal and supplemental content related to the service via transmitter 118. The broadcast network may also include a radio, television or IP datacasting broadcasting network. The broadcast network 114 may also transmit supplemental content which may include a television signal, audio and/or video streams, data streams, video files, audio files, software files, and/or video games. In the case of transmitting IP datacasting services, the service source 122 may communicate actual program content to user device 112 through the broadcast network 114 and additional information such as user right and access information for the actual program content through the cellular network 116.

The mobile device 112 may also contact the service source 122 through the cellular network 116. The cellular network 116 may comprise a wireless network and a base transceiver station transmitter 120. The cellular network may include a second/third-generation (2G/3G) cellular data communications network, a Global System for Mobile communications network (GSM), a Universal Mobile Telecommunications System (UMTS) or other wireless communication network such as a WLAN network.

In one aspect of the invention, mobile device 112 may comprise a wireless interface configured to send and/or receive digital wireless communications within cellular network 116. The information received by mobile device 112 through the cellular network 116 or broadcast network 114 may include user selection, applications, services, electronic images, audio clips, video clips, and/or WTAI (Wireless Telephony Application Interface) messages. As part of cellular network 116, one or more base stations (not shown) may support digital communications with receiver device 112 while the receiver device is located within the administrative domain of cellular network 116.

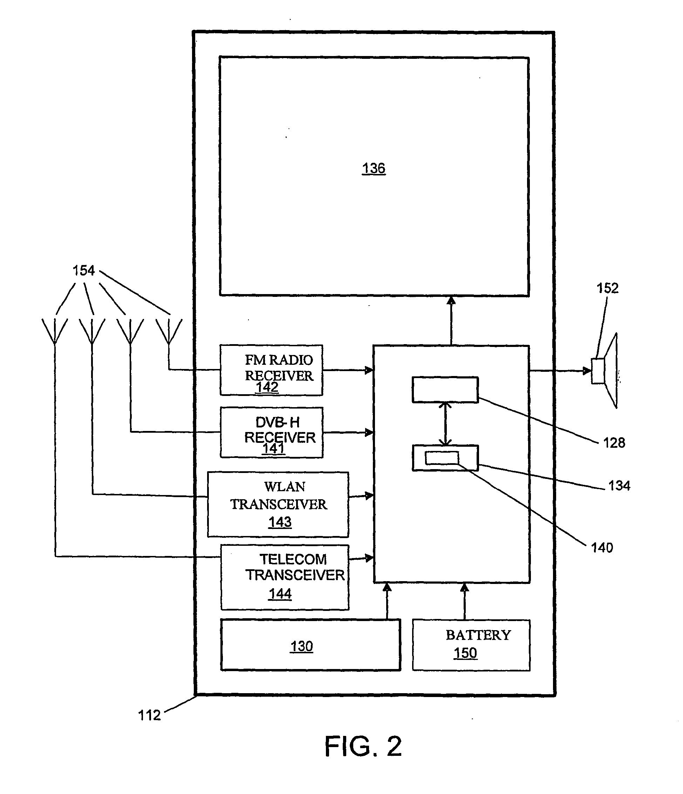

As shown in Figure 2, mobile device 112 may include processor 128 connected to user interface 130, memory 134 and/or other storage, and display 136. Mobile device 112 may also include battery 150, speaker 152 and antennas 154. User interface 130 may further include a keypad, touch screen, voice interface, four arrow keys, joy-stick, data glove, mouse, roller ball, touch screen, or the like.

Computer executable instructions and data used by processor 128 and other components within mobile device 112 may be stored in a computer readable memory 134. The memory may be implemented with any combination of read only memory modules or random access memory modules, optionally including both volatile and nonvolatile memory. Software 140 may be stored within memory 134 and/or storage to provide instructions to processor 128 for enabling mobile device 112 to perform various functions. Alternatively, some or all of mobile device 112 computer executable instructions may be embodied in hardware or firmware (not shown).

Mobile device 112 may be configured to receive, decode and process digital broadband broadcast transmissions that are based, for example, on the Digital Video Broadcast (DVB) standard, such as DVB-H, DVB-T or DVB-MHP, through a specific DVB receiver 141. The mobile device may also be provided with other types of receivers for digital broadband broadcast transmissions. Additionally, receiver device 112 may also be configured to receive, decode and process transmissions through FM/AM Radio receiver 142, WLAN transceiver 143, and telecommunications transceiver 144. In one aspect of the invention, mobile device 112 may receive radio data stream (RDS) messages.

In an example of the DVB standard, one DVB 10 Mbit/s transmission may have 200 50-kbit/s audio program channels or 50 200-kbit/s video (TV) program channels. The mobile device 112 may be configured to receive, decode, and process transmission based on the Digital Video Broadcast-Handheld (DVB-H) standard or other DVB standards, such as DVB-MHP, DVB-Satellite (DVB-S), DVB-Terrestrial (DVB-T) or DVB-Cable (DVB-C). Similarly, other digital transmission formats may alternatively be used to deliver content and information of availability of supplemental services, such as ATSC (Advanced Television Systems Committee), NTSC (National Television System Committee), ISDB-T (Integrated Services Digital Broadcasting - Terrestrial), DAB (Digital Audio Broadcasting), DMB (Digital Multimedia Broadcasting), FLO (Forward Link Only) or DIRECTV. Additionally, the digital transmission may be time sliced, such as in DVB-H technology. Time-slicing may reduce the average power consumption of a mobile terminal and may enable smooth and seamless handover. Time-slicing consists of sending data in bursts using a higher instantaneous bit rate as compared to the bit rate required if the data were transmitted using a traditional streaming mechanism. In this case, the mobile device 112 may have one or more buffer memories for storing the decoded time sliced transmission before presentation.

In one example of the invention, ESG fragments may be delivered to a subscriber terminal in one or more data streams or channels. In this example, a plurality of channels (such as IP-packet streams) can be used to deliver ESG information to the subscriber terminal. For example, the ESG fragment may provide the subscriber terminal with notification of upcoming events to be provided by a service provider, changes in current events provided by a service provider or updated or on-going information for a user or group of users.

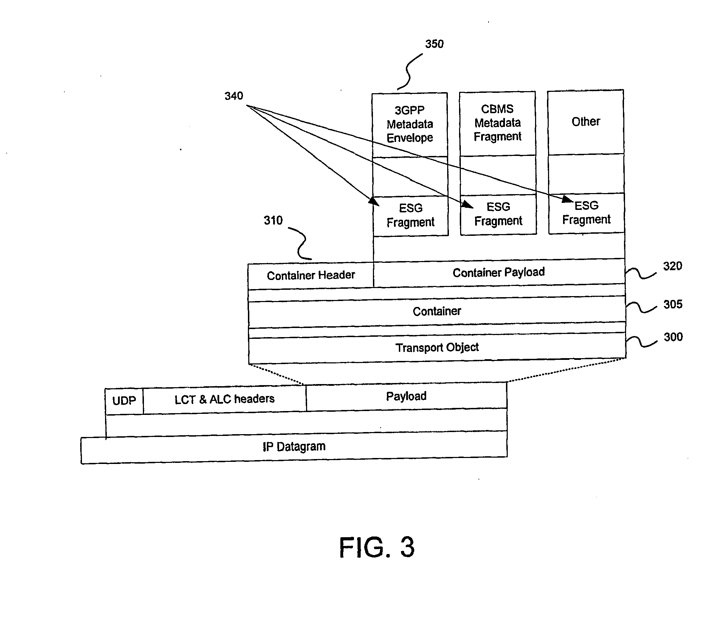

ESG fragments may be delivered in a transport object which may transport ESG information in a container. Thus, ESG fragments may be placed in a container that may be delivered in its own transport object. The container may further include a container header and a container payload, for example, in which the container header may provide information on where each container is located within the transport object. In one example, the transport object may contain a single container or a plurality of containers, each container including at least one ESG fragment. FIG. 3 is a diagram of an example transport object in accordance with at least one aspect of the present invention. As illustrated in the example of FIG. 3, a transport object 300 may comprise a container that may include a container header 310 and a container payload 320. In one example, the container header 310 and the container payload 320 are incorporated into a single container 305 which may be incorporated into a single transport object 300 so that the container header 310 need not be recombined with information regarding where each container is located within different transported objects. Alternatively, the transport object 300 may contain a plurality of containers and a container may contain any number of ESG fragments 340. The container header 310 may contain information associated with a corresponding ESG fragment such as, for example, information regarding the container header 310 itself and/or the container payload 320.

In the example illustrated in FIG. 3, the ESG fragment 340 is contained in the container payload 320. The container header 310 may contain descriptors for identifying and describing ESG fragments in the corresponding container payload 320. Thus, the characteristics of the ESG fragment may be identified, such as, but not limited to, the position of the ESG fragment in the transport object 300 or the length of each contained ESG fragment 340. For example, in one embodiment, a field specifies where the particular ESG begins within the container payload 320 by providing, for example, an offset value, start and end points, or the like. In other embodiments, metadata 350 may be associated with the individual ESG fragments 340, located within or proximate to the header 310, descriptor entries, an ESG fragment 340 or a mixture thereof. In one exemplary embodiment, the association of a 3GPP metadata envelope with an ESG fragment 340 may substitute for, or negate the need of additional metadata to be located in the header 310 in relation to that particular ESG fragment.

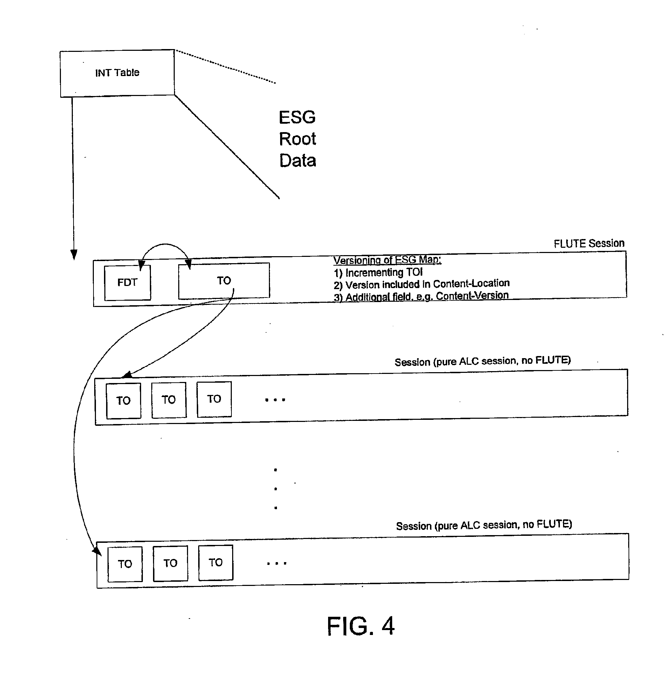

FIG. 4 illustrates an example of transmitting a plurality of single Transport Objects. As illustrated in Figure 4, the Transport Objects (TO) of the current invention may be carried in, for example, FLUTE (File Delivery over Unidirectional Transport) sessions, or a pure Asynchronous Layered Coding (ALC) session. In the example of FIG. 4, the ESG Root Channel data, such as IP Address, port number and Transport Session Identifier (TSI), are announced in the IP/MAC Notification Table (INT Table) which may be, for example, carried in the SI/PSI stream in DVB-H as one of the SI tables of DVB-H. The FLUTE session of the ESG Root Channel comprises a File Delivery Table (FDT) of the session and one or more Transport Objects (TO). These Transport Objects that may be delivered in announcement carousels contain mapping between the different parts of ESGs and access parameters to the different ESG methods in which the ESG data is transmitted. The ESGs may differ from each other. For example, ESGs may be in different languages, genres or encoding.

Examples of access parameters may include, for example, IP Addresses, port numbers, TSIs, start and end times etc. The FLUTE session thus declares how the ESG data is distributed to different sessions. The TOs of the FLUTE session carrying this mapping data are described in the FDT of the FLUTE session. The ESG mapping data may be delivered in one or multiple TOs. The mapping can be made using XML Schema, plain ASCII text, Structured ASCII text such as multipart MIME or MIME headers, as binary with enumerated types or through various other means as is known in the art. The ESG data in this example may be delivered in one or more TOs, which may be within pure ALC sessions, for example. The ESG data or parts of it may be delivered in some embodiments of the invention in one or more FLUTE sessions in addition to or instead of ALC sessions.

In one example of the invention, a notification function is provided in a service guide or ESG fragment for delivering notification information or messages from a service provider to a user or subscriber. Such notification information may include, for example, notification information pertaining to upcoming events including notification of a change of service schedule, notification of the start of a new service, promotions or advertisements of a specific program, service or upcoming program or service, an emergency announcement, public service announcement or notification of changes to the service guide or other change of information.

In one example, the notification information or messages may be delivered to a user or subscriber via User Datagram Protocol/Internet Protocol (UDP/IP). A designated UDP port may be used for creating the notification information or messages such that the notification information or message may be embedded into ongoing sessions or through separate sessions. For example, the notification information or message may be encapsulated into a UDP packet using a predefined UDP port. NotificationPort is one example of the UDP port (see detailed description below). The UDP packet may be encapsulated into an IP packet with IP addresses of an ongoing broadcast session of a subscriber terminal to receive the notification information or message. In one example, the notification information or messages may be encoded in XML and delivered in the UDP packet to the subscriber terminal. The subscriber terminal may receive the UDP packet with the predefined UDP port and the encapsulated notification information or message and may also process the UDP packet as a container for the notification information or message. Alternatively, the UDP packet may be encapsulated into the IP packet with predefined IP multicast/broadcast addresses (e.g., NotificationAddress - described in detail herein) or unicast IP addresses. Thus, the UDP packet containing the notification information or message may be received at the designated subscriber terminals.

Notification information or messages may be delivered to a subscriber terminal via a notification channel that may be declared in a Service Guide Delivery Descriptor (SGDD). Also, a UDP port is declared that is associated with each service as the notification channel.

The notification information or messages may be delivered in a variety of ways which may depend on the type of notification information to be delivered. For example, the notification information may be user-oriented such that the information may be displayed on the subscriber terminal display. This display may be in the form of a text or multimedia display, for example. However, certain types of notification information may not be user-oriented. For example, certain types of notification information may include information for a subscriber terminal to receive a service guide or service. Such "terminal-oriented" notification information may be provided in a service guide to the subscriber terminal however a text or multimedia display is optional.

The presentation or rendering of the notification information or message to a user or subscriber may vary depending on the type of presentation desired. For example, the notification information or message may be received by the user or subscriber during reception of the corresponding program or services and may be stored for later viewing or use. Alternatively, the notification information may be viewed as an overlay or as a split screen with the corresponding program or service. In this case, the notification information may be viewed simultaneously with the corresponding program or service.

Also, terminal-oriented notification information pertaining to the usage of the notification information or message may be provided to a subscriber terminal. Thus, the presentation of the notification information or message may vary depending on the usage of the notification information. Examples of usages of notification information include service guide updates or changes, the notification of a start of a program or service, notification of the start of a file download, etc.

In one example of one aspect, notification information may be provided in descriptors within an ESG fragment such as Service Guide Delivery Descriptors (SGDD). SGDDs may carry information on various attributes of ESG fragments such as the availability or validity of the ESG fragments, including data that can be used to retrieve and/or identify the associated ESG fragments. ESG fragments may also be grouped together and identified as a group by a Service Guide Delivery Unit (SGDU) in a variety of ways. For example, the ESG fragments may be grouped together based on certain criteria declared in an element or parameter such as a GroupingCriteria element of the SGDD. Hence, the SGDD can be used to specify criteria for grouping ESG fragments in a service guide in an SGDU.

In this example, an SGDD may specify notification information for a subscriber or group of subscribers of information of interest to the subscriber or group of subscribers. As one example, a service provider may wish to change the time of broadcast of a program. If a subscriber has been receiving a particular broadcast at a particular time or day, the subscriber may be unaware of the proposed change in the time or day of broadcast of the program. Thus, the subscriber, not having been properly and timely notified of the change of schedule, may miss the program.

In another example, a subscriber may wish to receive timely information in which prompt notification is necessary. Scores of currently or recently played sporting events is one example of such information. A user or subscriber may wish to receive notification of the current scores of sporting events of interest. The service provider in this example may provide an SGDD containing such notification information so that the user or subscriber may be kept up-to-date with regards to the desired information.

In addition, the service provider may provide an emergency notification in an SGDD. For example, weather changes, predicted up-coming hazards, warnings, etc., may be supplied in an SGDD of the ESG fragment. In this way, a user may be informed of any relevant conditions that may be of interest to the user.

In an example of an SGDD containing notification information or messages, a ServiceGuideDeliveryDescriptor may be provided in the ESG fragment that may specify a notification reception which may include, for example, a sub-element for providing reception information for the notification information or messages. Reception information may include, for example a sub-element for describing or designating a UDP port used in the delivery of the notification information or message. As one example, the sub-element may be an integer value for designating the corresponding notification port. Based on the notification port sub-element, the notification information or message may be delivered to a subscriber terminal through an on-going session or separate sessions.

In addition, the notification reception sub-element of the SGDD may further specify a notification address via a notification address sub-element. In this example, the notification address sub-element may be a character string and may specify an IP multicast address for delivery of notification information or messages.

In addition, a notification parameter may be included in an ESG fragment for providing attributes of the notification information or message. For example, the notification parameter may specify an identifier of the notification message. This identifier may be, for example, a URI that may specifically identify the corresponding notification message. Based on the identifier attribute, a subscriber terminal may be identified as a subscriber terminal to receive the corresponding notification information or message.

Also, the notification parameter may indicate the notification type of the corresponding notification information or message. As described herein, the notification information may be of varying types including a user-oriented message (e.g., a message from the service provider, an emergency announcement, etc.) or a terminal-oriented message (e.g., a service guide update, a file download, etc.). The type of notification information may be specified in a notification type attribute within the notification parameter.

The notification parameter may further provide information as to the validity of the notification information including the time period over which the notification information is valid. In this example, after the specified valid time period, the notification information may be designated as expired.

The notification parameter may also provide sub-elements to further characterize the notification information. One example of such a sub-element is a name sub-element which may include a character string corresponding to a name or title of the corresponding notification information. The name sub-element may further be provided in multiple languages. Another example of a sub-element is a description sub-element that may include a character string describing the content of the notification information. Also, a presentation type sub-element may be provided as an integer value that may define the type of presentation corresponding to the notification information. For example, the presentation type sub-element may indicate if the subscriber terminal is to render the notification information immediately, store the notification information for later display, or render the notification information as an overlay or split-screen with the corresponding program or service.

Other sub-elements may include an extension URL sub-element which may be a URI for providing any additional pertinent information pertaining to the notification information. Also, a session information sub-element may be provided for defining the delivery session information or corresponding objects or fragments delivered in the delivery session. In one example, a subscriber terminal may receive the session information sub-element and may access a relevant session based on the session information sub-element and perform a corresponding action. The session information sub-element may further contain validity information (e.g., valid from or valid to times) or usage type for defining the type of obj ect transmitted through the indicated delivery session. This may include, for example, an indication if the delivery session is for transmitting a fragment of the updated service guide, file delivery, or indication that the service would start through the delivery session as scheduled. The session information sub-element may also contain other sub-elements such as a delivery session parameter for describing the delivery session. The delivery session sub-element may further specify a source IP address of the delivery session and/or an identifier of a target delivery session. The session information sub-element may further include a parameter or sub-element for providing a transport object ID for providing an ID of a transport object delivered through the indicated delivery session, a fragment parameter for identifying a fragment delivered through the indicated delivery session which may include a Fragment ID and/or version of the fragment, or an alternative URI for specifying a URI as an alternative method for delivery of the notification information.

The notification parameter may further provide a media information parameter or sub-element for constructing multimedia notification information. For example, the media information sub-element may provide information pertaining to the picture, video and/or audio of the notification information. As an example, the media information parameter or sub-element may include a picture parameter for defining how to obtain a picture and MIME type. For example, the picture parameter may provide a character string indicating the MIME type of picture or may provide a URI indicating the URI referencing the picture. Also, the media information parameter or sub-element may include a video sub-element for defining how to obtain a video and MIME type. The video sub-element may contain a character string for indicating the MIME type of the video and/or a URI referencing the video. Also, the media information parameter or sub-element may also include an audio sub-element for defining how to obtain an audio and MIME type. This may include an attribute for describing the MIME type of audio and/or a URI for referencing the audio.

In another example of the present invention, a plurality of programs or services is provided by a service provider. However, certain programs or services contain notification information pertaining to the associated program or service while other programs or services do not contain notification information. In this example, multiple levels of notification information are provided. In one level of notification of this example, a global notification channel is provided. The global notification channel is targeted to all subscribers and users that are declared in the SGDD. Emergency broadcasts are an example of notification information in which the notification information is desired-to be delivered to all subscribers able to receive the broadcast. Such delivery of notification information is provided as described above.

In a second level of notification information delivery in this example, the notification itself may be a service. Some examples include the broadcast of breaking news, sports scores, weather updates, stock quotes, etc. Thus, notification information including such rapidly-changing and unpredictable information to be delivered to subscribers may be indicated in an ESG fragment or service guide. In this second level of notification information delivery, additional information or parameters may be delivered in an ESG fragment or service guide including a service fragment parameter for describing the attributes of a service fragment. The service fragment parameter may contain a notification services parameter for further characterizing the type of services corresponding to the ESG fragment. The service fragment parameter may contain a type attribute which may be an integer value for describing the type of service provided. A value may be assigned to the type attribute such that a valid service fragment may be instantiated that provides notification services based on the type attribute. In one example the value of the type attribute for providing notification services is 10. Further, additional fields may be used to describe the nature of the notification service. Table I provides an example of a service fragment parameter including a type attribute for providing notification services.

**TABLE I**

| **Name** | **Type** | **Category** | **Cardinality** | **Description** | | **Data Type** |
|---|---|---|---|---|---|---|
| Service | E | O | 0..N | Service fragment | | |
| | | | | Contains the following attributes: | | |
| | | | | | id | |
| | | | | | version | |
| | | | | | validFrom | |
| | | | | | validTo | |
| | | | | | type | |
| | | | | | ServiceProtection | |
| | | | | | ServiceBaseCID | |
| | | | | | | |
| | | | | Contains the following sub-elements: | | |
| | | | | | ExtensionURL | |
| | | | | | URI | |
| | | | | | Name | |
| | | | | | Description | |
| | | | | | ParentalRating | |
| | | | | | TargetUserProfile | |
| | | | | | Genre | |
| | | | | | UserRating | |
| | | | | | MediaInformation | |
| | | | | | broadcast_area | |
| Id | A | M | 1 | ID of the service fragment, unique for BSDA | | unsignedInt (32 bits) |
| version | A | M | 1 | Version of this fragment. The newer version overrides the older one as soon as it has been received. | | unsignedInt (32 bits) |
| validFrom | A | O | 0..1 | The first moment when this fragment is valid. If not given, the validity is assumed to have started at some time in the past | | Integer (32 bits) expressed as NTP time |
| validTo | A | O | 0..1 | The last moment when this fragment is valid. If not given, the validity is assumed to end in undefined time in the future. | | Integer (32 bits) expressed as NTP time |
| type | A | M | 1 | Type of the service. Allowed values are: | | Integer (8 bits) |
| | | | | 0 - unspecified | | |
| | | | | 1 - Basic TV, non-interactive | | |
| | | | | 2 - Basic TV, interactive | | |
| | | | | 3 - Clipcast | | |
| | | | | 4 - Mixed Basic TV and Clipcast non-interactive | | |
| | | | | 5 - Mixed Basic TV and Clipcast, with interaction | | |
| | | | | 6 - Basic Radio, non-interactive | | |
| | | | | 7 - Basic Radio, interactive | | |
| | | | | 8 - File download services | | |
| | | | | 9 - Software management services | | |
| | | | | 10 - Notification services | | |
| | | | | 11 - 200 reserved for future use | | |
| | | | | 201-255 reserved for proprietary use | | |
| ServiceProtection | A | O | 0..1 | Specifies if the service is encrypted (false) or not (true) | | Boolean |
| ServiceBaseCID | A | O | 0..1 | Part of the Content identifier. Used as linkage between the rights object and Service. | | String |
| ExtensionURL | E1 | O | 0..N | URL containing additional information related to this fragment in a web page. The terminal can fetch further information by accessing this URL. | | AnyURI |
| URI | E1 | O | 0..1 | The globally unique Service URI | | AnyURI |
| | | | | Note: a unique service identifier is important for roaming | | |
| Name | E1 | M | 1..N | Name of the Service, possibly in multiple languages.The language is expressed using built-in XML attribute xml:lang with this element. | | String |
| Description | E1 | O | 0..N | Description, possibly in multiple languages.The language is expressed using built-in XML attribute xml:lang with this element. | | String |
| ParentalRating | E1 | O | 0..N | The recommended age limit given as the age defined by the local official preview board | | Integer |
| | | | | The allowed values are those defined in the ParentalRating Descriptor of the EIT table (cf. ETSI EN 300 468) | | |
| TargetUserProfile | E1 | O | 0..1 | Profile of the users who the service or content is targeting at. For example, age, gender, occupation, etc. Details of the sub-elements TBD. | | |
| Genre | E1 | O | 0..N | Classification of service associated with characteristic form (e.g. comedy, drama) | | Integer |
| UserRating | E1 | O | 0..N | Rating information collected from users (e.g. favourism, or recommended age limit) | | Integer |
| MediaInformation | E1 | O | 0..N | Optional reference to an icon, pictogramme, animation or audio. PreviewData or reference to PreviewData is used here. | | |
| | | | | Attribute: | | |
| | | | | usage | | |
| | | | | id | | |
| usage | A | M | 1 | Possible values: background, icon (e.g.) | | Integer (8 bits) |
| Id | A | M | 1 | ID of the PreviewData fragment | | unsignedInt (32 bits) |
| broadcast_area | E1 | O | 0..1 | Broadcast area to include location information for BCAST contents | | |
| | | | | Sub-elements: | | |
| | | | | target_area | | |
| | | | | hor_acc | | |
| target_area | E2 | O | 0..N | The target area to distribute contents (as specified in the [OMA MLP] with modifications) | | |
| | | | | Sub-elements: | | |
| | | | | Shape | | |
| | | | | cc | | |
| | | | | name_area | | |
| | | | | zip code | | |
| shape | E3 | O | 0..1 | Shapes used to represent a geographic area that describes (as specified in the [OMA MLP]) | | See [OMA MLP] |
| Cc | E3 | O | 0..1 | Country code, 1-3 digits e.g. 355 for Albania (as specified in the [OMA MLP]) | | See [OMA MLP] |
| name_area | E3 | O | 0..1 | Geopolitical name of area such as 'Seoul' (as specified in the MLP]) | | See [OMA MLP] |
| Zip code | E3 | O | 0..1 | Zip code | | Integer |
| hor_acc | E2 | O | 0..N | Horizontal accuracy in meters (as specified in the [OMA MLP]) | | See [OMA MLP] |
| <proprietary elements/attirbutes > | E1 or low er | O | 0..N | Any number of proprietary or application-specific elements or attribtues that are not defined in this specification. | | |

Where the type can be an Element (E), an Attribute (A), a first level sub-element (E1), a second level sub-element (E2) or a third level sub-element (E3) and the category can be optional (O) or preferred/mandatory (M).

In a third level of notification information delivery in this example, the notification is a component of a program or service. In this example, the notification component is provided as an access type. To illustrate, a program or service may include different access types. For example, a video program may include audio stream access (to carry audio over broadcast), video stream access (to carry video over broadcast), or auxiliary data access (to carry other information such as subtitling over broadcast). In this example of the present invention, the ESG fragment or service guide may provide an access fragment definition corresponding to a notification component. For example, an access fragment may be defined via an access fragment parameter. The access fragment parameter may include an access type attribute for defining the type of access fragment. The access type attribute may be, for example, an integer value. Based on the value of the access type attribute, the access fragment may define a notification component. As one example, the access type attribute may indicate that the access fragment is a notification component if the access type attribute is set to a predetermined value. In one example, the access type indicates the access fragment is a notification component if the access type attribute is set to 11. Table II provides an example Access fragment parameters including an Access type attribute for providing notification services.

**TABLE II**

| **Name** | **Type** | **Catgory** | **Cardinality** | **Description** | | | **Data Type** |
|---|---|---|---|---|---|---|---|
| Access | E | O | 0..N | Access fragment | | | |
| | | | | Contains the following attributes: | | | |
| | | | | | id | | |
| | | | | | version | | |
| | | | | | validFrom | | |
| | | | | | validTo | | |
| | | | | | ServiceProtection | | |
| | | | | | AccessType | | |
| | | | | | AudioLanguage | | |
| | | | | | | | |
| | | | | Contains the following sub-elements: | | | |
| | | | | | ExtensionURL | | |
| | | | | | ServiceIDRef | | |
| | | | | | | ScheduleIDRef | |
| | | | | | UsageInfo | | |
| | | | | | SessionDescriptionReference | | |
| | | | | | SDP | | |
| | | | | | InteractiveAccessURL | | |
| | | | | | TerminalCapabilityRequirement | | |
| | | | | | BandwidthRequirement | | |
| | | | | | ApplicationSpec | | |
| | | | | | MediaInformation | | |
| Id | A | M | 1 | ID of the Access fragment | | | unsignedInt (32 bits) |
| version | A | M | 1 | Version of this fragment. The newer version overrides the older one as soon as it has been received. | | | unsignedInt (32 bits) |
| validFrom | A | O | 0..1 | The first moment when this fragment is valid. If not given, the validity is assumed to have started at some time in the past | | | Integer (32 bits) expressed as NTP time |
| validTo | A | O | 0..1 | The last moment when this fragment is valid. If not given, the validity is assumed to end in undefined time in the future. | | | Integer (32 bits) expressed as NTP time |
| ServiceProtection | A | O | 0..1 | If true, this indicates that this service is protected; if false, this indicates that this service is free to air. | | | Boolean |
| AccessType | A | M | 1 | Defines the type of access .Possible values: | | | Integer (8 bits) |
| | | | | | | | |
| | | | | 1 - Default access object; has to exist for A/V streaming services (such as TV, radio, etc.). It is used as default in case of multiple accesses; associated SDP needed | | | |
| | | | | | | | |
| | | | | 2 - Alternate access object; associated SDP needed | | | |
| | | | | | | | |
| | | | | 3 - File carousel; to be used for scheduled file download and file carousel type of services; associated SDP needed | | | |
| | | | | | | | |
| | | | | 4 - File download; to be used for file download over interaction network; associated AccessURI needed | | | |
| | | | | | | | |
| | | | | 5 - Service_SMS; this type of access is used for creating various SMS-based services (voting, etc.); no associated SDP | | | |
| | | | | | | | |
| | | | | 6 - Service_web_local; this type access is used for pointing to locally stored web pages; no associated SDP | | | |
| | | | | | | | |
| | | | | 7 - Service_web; this type access is used for pointing to internet services; no associated SDP | | | |
| | | | | | | | |
| | | | | 8 - Service_voice_call; this type of access is used for making a phone call | | | |
| | | | | | | | |
| | | | | 9 - Service_MMS; this type of access is used for creating various MMS-based services (voting, etc.); no associated SDP | | | |
| | | | | | | | |
| | | | | 10 - Service_java_app; this type of access is used for launching Java applications | | | |
| | | | | | | | |
| | | | | 11 - Notification component | | | |
| AudioLanguage | A | O | 0..N | The language of the Audio Stream | | | Language |
| ExtensionURL | E1 | O | 0..N | URL containing additional information related to this fragment in a web page. The terminal can fetch further information by accessing this URL. | | | AnyURI |
| ServiceIDRef | E1 | O | 0..N | Reference to the service fragment(s) to which the access fragment belongs. | | | unsignedInt (32 bits) |
| | | | | Either one of ServiceIDRef or ScheduleIDRef but not both SHALL be specified. Note: Implementation in XML Schema using <choice>. | | | |
| | | | | Each Service fragment SHALL be associated to at least one Access fragment to enable the terminal access the Service. | | | |
| ScheduleIDRef. | E1 | O | 0..N | Reference to the schedule fragment(s) to which the access fragment belongs. | | | unsignedInt (32 bits) |
| | | | | This provides a reference to a Schedule fragment to temporarily override the default Access fragment of the Service addressed by the Schedule. | | | |
| | | | | Either one of ServiceIDRef or ScheduleIDRef but not both SHALL be specified. Note: Implementation in XML Schema using <choice>. | | | |
| UsageInfo | E1 | O | 0..N | This text helps the user understand what difference it makes to use one or the other access fragment. It's mandatory in case more than one access fragment is available at a given point in time. | | | String |
| | | | | Possibly in multiple languages.The language is expressed using built-in XML attribute xml:lang with this element. | | | |
| Session Description Reference | E1 | O | 0..1 | The reference to the SessionDescription this access relates to. | | | |
| | | | | Note: the SessionDescription itself may be delivered in two ways via broadcast or via fetch over interaction channel. | | | |
| | | | | In the case of broadcast delivery, the SessionDescription is either delivered in SGDU or encapsulated in this Access fragment. In the latter case, this element is not used but the SDP element is used instead. | | | |
| | | | | In the case of fetch over interaction channel, the SessionDescription can be acquired by accessing the URI (given as attribute of this element). | | | |
| | | | | Attributes: | | | |
| | | | | | Type | | |
| | | | | | URI | | |
| | | | | | Id | | |
| Type | A | M | 1 | Type of the session description referred by this SessionDescriptionReference | | | Integer |
| | | | | 1 - SDP | | | |
| | | | | 2 - MBMS User Service Description (MBMS-USD) as specified in [26.346] section 5.2. It may contain one or several SDP descriptions. | | | |
| URI | A | O | 0..1 | The URI to the file containing SessionDescription that the media application in the terminal uses to access the service. | | | AnyURI |
| Id | A | O | 0..1 | The id of the SessionDescription fragment this access refers to. | | | unsignedInt (32 bits) |
| SDP | E1 | O | 0..1 | A session description in SDP (IETF session description protocol) format | | | String (in SDP format) |
| InteractiveAcces sURL | E1 | O | 0..N | Specify alternative URL of the content for retrieving it via the interaction channel if the content cannot be received via the broadcast channel. | | | AnyURI |
| TerminalCapabil ity | E1 | O | 0..1 | Specification of required terminal capabilities, such as protocols, codecs, bitrate, processing, memory; | | | Strong |
| Requirement | | | | UAprof is used for expressing the capabilities | | | |
| BandwidthRequi rement | E1 | O | 0..1 | Specification of required network bandwidth; | | | Integer |
| | | | | A broadcast service can include multiple accessible streams (same content) with different bandwidth, so that the terminal can make a choice depending on its current reception condition. | | | |
| ApplicationSpec | E1 | O | 0..N | Application type that can consume the service using this access spec defined by MIME type | | | String |
| MediaInformatio n | E1 | O | 0..N | Optional reference to an icon, pictogramme, animation or audio. PreviewData or reference to PreviewData is used here. | | | |
| | | | | Attributes: | | | |
| | | | | usage | | | |
| | | | | id | | | |
| usage | A | M | 1 | Possible values: background, icon (e.g.) | | | Integer (8 bits) |
| Id | A | M | 1 | ID of the PreviewData fragment | | | unsignedInt (32 bits) |
| <proprietary elements/attribut es> | E1 or low er, A | O | 0..N | Any number of proprietary or application-specific elements or attributes that are not defined in this specification. | | | |

Where the type can be an Element (E), an Attribute (A), a first level sub-element (E1), a second level sub-element (E2) or a third level sub-element (E3) and the category can be optional (O) or preferred/mandatory (M).

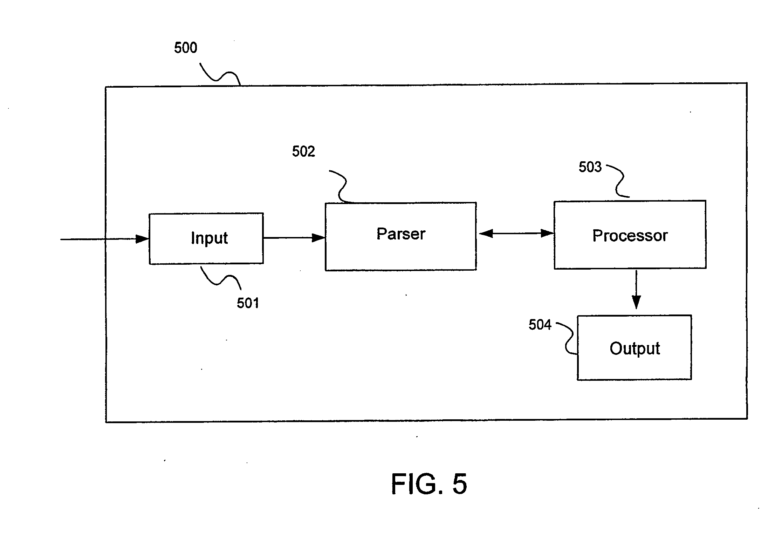

FIG. 5 is a partial block diagram illustrating an example of a receiver according to one aspect of the present invention. In this example, the receiver 500 contains an input 501. The input 501 may be configured to receive information transmitted as an ESG fragment or transmitted using an ESG fragment transportation mechanism. The receiver 500 may further include a parser 502 for identifying parameters in an ESG fragment associated with a notification. For example, the parser may identify a first parameter for declaring a corresponding notification in a notification channel. The first parameter may be, for example, a parameter declared in a Service Guide Delivery Descriptor (SGDD) such as a notification reception parameter. In one example, an ESG fragment contains a notification reception parameter for providing information for notification information or messages. The notification reception parameter may be included in a service guide delivery descriptor element in the ESG fragment. Also, the notification reception parameter may indicate a port number associated with the notification information or message and corresponding service. The input 501 receives the ESG fragment containing the first parameter and the parser 502 parses the ESG fragment to identify the first parameter.

Also, the ESG fragment may further contain a second parameter for identifying the notification as the service. For example, the ESG fragment may correspond to a service which itself is a notification. Examples include a service that broadcasts breaking news, stock quotes or sports scores, etc. The second parameter in this example may be a service fragment parameter for defining the type of service fragment. In this example, the type fragment of the service fragment may indicate that the type of service is a notification service (e.g., broadcasting breaking news). The service fragment may further include additional fields for further characterizing the nature of the notification service.

Thus, in this example, the ESG fragment may contain a service fragment which may include a type parameter indicating that the service is a notification service. The input 501 receives the ESG fragment and the parser 502 parses the ESG fragment to identify the second parameter. In this way, the receiver 500 may identify the service as a notification service via the second parameter or the service fragment type parameter. In addition, the service fragment may link to an access fragment to provide additional description of the mode of transmission of the notification service. This is described in more detail below.

In another example, the ESG fragment may contain a third parameter within an access fragment for identifying a component of the service as the notification. An example of this may be an ongoing sports event in which components of the event are provided at the receiver. For example, the ongoing sports event or broadcast may include an audio stream (i.e., audio stream access), a video stream (i.e., video stream access) and auxiliary data. In this example, the broadcast may include an additional access for carrying the notification. The additional access (or component) may be a new access/component or may be an auxiliary data access/component. In this example, the ESG fragment may be an access fragment containing an access type parameter for describing the access as carrying the notification. For example, the third parameter (in this example, an access type parameter) may be set to a value corresponding to a notification component to identify a component of the service as a notification component. Thus, in this example, an ESG fragment containing an access fragment type parameter of a value indicating the access fragment as a notification component may be received at the input 501 of a receiver 500. The parser 502 may parse the ESG fragment to identify the access fragment type parameter and may identify a component of the corresponding service as a notification component based on the value of the access fragment type parameter.

The receiver 500 may further include a processor 503 for controlling or instructing the parser 502 for identifying a corresponding parameter from within the ESG fragment to identify the notification. Data corresponding to the notification may be output on the output 504. For example, the data may be displayed for the user or subscriber.

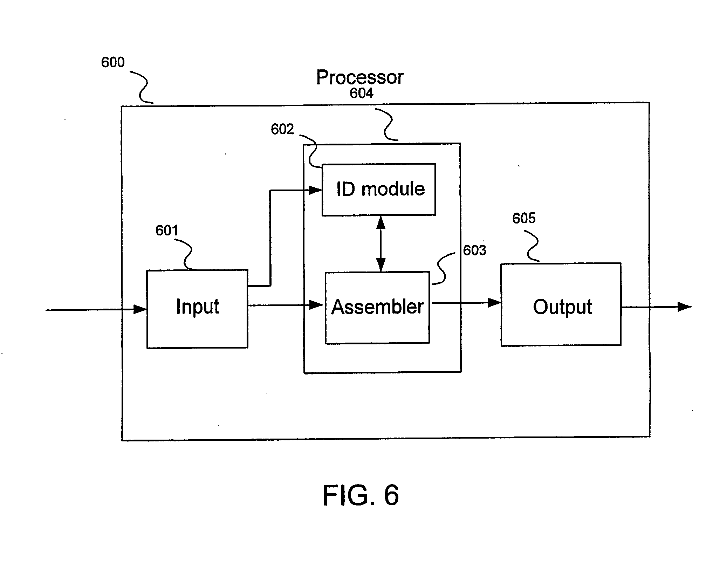

FIG. 6 is a partial block diagram illustrating an example of a transmitter according to one aspect of the present invention. In this example, the transmitter 600 includes an input 601 for receiving data to be included in an ESG fragment for transmission. This data may be received from a variety of sources, for example, a service provider or broadcaster. The transmitter 600 may further include a processor 604 for assembling or processing an ESG fragment corresponding to a program or service. FIG. 6 illustrates the processor 604 as containing an identifier module 602 and an assembler 603. However, any of these components may be separate from the processor 604, if desired.

The identifier module 602 may determine a notification associated with the ESG fragment. For example the identifier module 602 may identify the ESG fragment as associated with a notification which may be transmitted to a receiver or subscriber station. The service associated with the ESG fragment may be the notification itself or the notification may be a component or access of the service. The transmitter may further include an assembler 603 for assembling an ESG fragment for transmission to a receiver or subscriber device. In this example, ESG fragment may be associated with a service and may include a notification. Based on the identification of the notification by the identifier module 602, the assembler 603 may include corresponding parameters in the ESG fragment. For example, if the identifier module 602 identifies the service associated with the ESG fragment as a notification service, the assembler 603 may include a parameter in a service fragment indicating that the service is a notification service. An example of a notification service is broadcasting of late breaking news or sports scores. Due to the unpredictable nature and frequent updating of this type if information, the service itself is a notification service. In this example, this is indicated as a type parameter in a service fragment. The assembler 603 thus includes a service fragment type parameter for indicating that the service is a notification service.

Also in this example, if the identifier module identifies the notification as a component of the service, the assembler 603 may include an access fragment in the ESG fragment including a type parameter (e.g., an access fragment type parameter) for indicating that the notification is a component or access of the service. Thus, in this example, the identifier module 604 identifies the notification as a component of the service. Based on the identifier module 602, the assembler creates an access fragment containing an access type parameter for indicating that a component of the service is the notification. The ESG fragment is transmitted via the output 605 to a receiver or subscriber station.

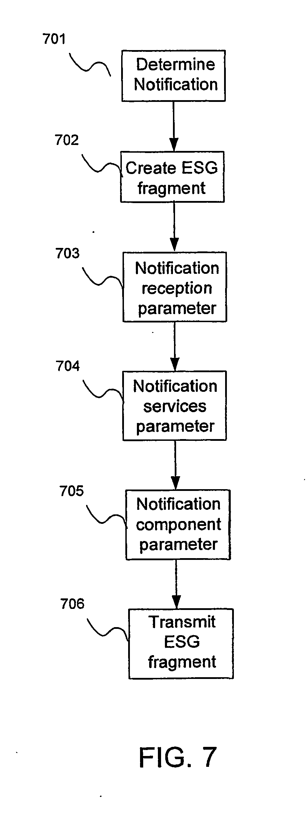

FIG 7 is a flowchart illustrating an example of transmitting an ESG fragment corresponding to a notification. In this example, a notification is determined (STEP 701). For example, a notification function is identified as desired for information for a receiver or group of receivers of an upcoming event regarding a broadcast program or service. Thus notification information or a notification message may be generated and transmitted via an ESG fragment to a receiver or group of receivers. In STEP 702, an ESG fragment corresponding to the program or service is created. The ESG fragment created may further contain information pertaining to the notification. For example, in STEP 703, a parameter (indicated in FIG. 7 as a notification reception parameter) may be included in the ESG fragment for indicating the reception of the notification information or message. As one example, the notification reception parameter may indicate a UDP port number through which the notification message may be received at a receiver.

In STEP 704, a parameter (illustrated in FIG. 7 as a notification services parameter) may be included in the ESG fragment for indicating the service is the notification. An example of such a service is broadcasting of breaking news or any information that is subject to frequent updating. The notification service parameter may be, for example, included in a service fragment as a type parameter, the value of which may indicate that the service is a notification. In STEP 705, a parameter (illustrated in FIG. 7 as a notification component parameter) may be included in the ESG fragment for indicating that the notification is a component of the service. As one example of such a service, the notification may be a one of a plurality of services associated with or corresponding to the program or service described in the ESG fragment. The ESG fragment may be transmitted to a receiver (STEP 706), the transmitted ESG fragment containing parameters for describing the notification associated with the service.

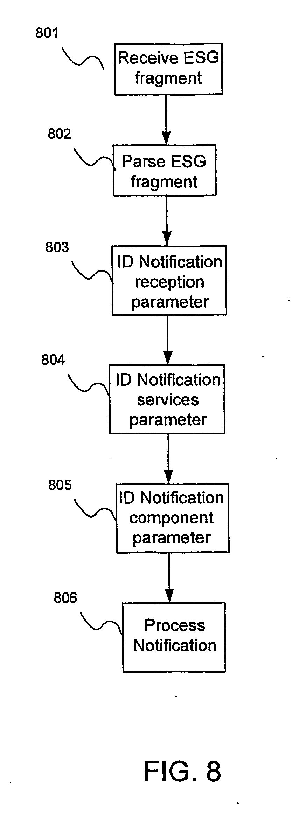

FIG. 8 is a flowchart illustrating an example of receiving an ESG fragment associated with a notification service or notification component of a service. In this example, an ESG fragment may be received at a receiver (STEP 801). The ESG fragment may contain, for example, parameters for describing an associated notification. The ESG fragment may be parsed at the receiver (STEP 802) to identify parameters contained therein. In one example, a parameter (illustrated as Notification reception parameter in FIG. 8) may be identified in the ESG fragment (STEP 803). This notification reception parameter may, for example, describe reception information of the notification information or messages. For example, the notification reception parameter may include a value indicating a UDP port number for receipt of notification information.

In STEP 804, a parameter (indicated in FIG. 8 as a notification services parameter) may be identified in the ESG fragment. For example, the notification services parameter may be a type parameter within a service fragment parameter. In this example, the type service fragment type parameter may indicate the service as the notification. For example, the notification may be the service itself such as the broadcasting of late breaking news.

In STEP 805, a parameter (indicated in FIG. 8 as a notification component parameter) may be identified in the ESG fragment. In this example, an access fragment may contain a type parameter (e.g., an access fragment type parameter) for indicating a component of the service as a notification. As one example, a broadcast program event such as sports event may include access or components such as audio, video, auxiliary data. In addition, the broadcast program event may also include a notification of, for example, changes in the programming, advertisements, emergency announcements, etc. This component of the program or service corresponding to the notification component may be indicated in an access fragment type parameter (STEP 805). In STEP 806, the notification thus identified may be further processed in the receiver. For example, the notification may be displayed at the receiver for the user or subscriber.

Embodiments of the invention includes any novel feature or combination of features disclosed herein either explicitly or any generalization thereof. While embodiments of the invention have been described with respect to specific examples including presently preferred modes of carrying out the invention, those skilled in the art will appreciate that there are numerous variations and permutations of the above described systems and techniques.

## Claims

1. An apparatus (600) comprising:
an input (601) configured to receive data to be included in an electronic service guide fragment (340) for transmission;
an identifier module (602) configured to determine that a notification associated with the electronic service guide fragment is part of a notification service;
an electronic service guide fragment assembler (603) configured:
to assemble the electronic service guide fragment with a service fragment, the service fragment including a service fragment type parameter for instantiating the electronic service guide fragment as corresponding to a notification service if the notification is the service; and
configured to assemble the electronic service guide fragment with an access fragment, the access fragment including an access fragment type parameter for declaring the electronic service guide fragment as corresponding to an access of a notification service if the notification is a component of the service; and
an output (605) for transmitting the electronic service guide fragment to the destination,
wherein the electronic service guide fragment includes a parameter for determining reception information for the notification.

2. The apparatus of claim 1 wherein the parameter for determining reception information for the notification includes a notification port parameter for determining a port corresponding to the destination of the notification information.

3. The apparatus of claim 1 wherein the parameter for determining reception information for the notification includes a notification address parameter for identifying an IP multicast address for notification delivery.

4. The apparatus of any preceding claim wherein the service fragment type parameter identifies the service as a notification.

5. The apparatus of claim 4 wherein the service fragment links to an access fragment to provide a description of the transmission of the notification.

6. The apparatus of any preceding claim wherein the access fragment type parameter identifies the notification as a component of the service.

7. A method comprising:
determining a that notification associated with an electronic service guide fragment (340) is part of a notification service;
assembling an electronic service guide fragment corresponding to a service including:
providing a service fragment, and
providing an access fragment,
wherein the service fragment includes a service fragment type parameter for instantiating the electronic service guide fragment as corresponding to a notification service if the service is the notification, and wherein the access fragment includes an access fragment type parameter for declaring the electronic service guide fragment as corresponding to an access of a notification service if the notification is a component of the service; and
outputting the electronic service guide fragment.

8. The method of claim 7 wherein the electronic service guide fragment includes a Service Guide Delivery Descriptor parameter for determining a destination of the notification.

9. The method of claim 8 wherein the Service Guide Delivery Descriptor parameter includes a notification reception parameter for providing information on the notification to the destination.

10. The method of claim 9 wherein the notification reception parameter includes a notification port parameter for determining a port corresponding to the destination of the notification information.

11. The method of claim 9 wherein the notification reception parameter includes a notification address parameter for identifying an IP multicast address for notification delivery.

12. The method of claim 7 wherein the service fragment type parameter identifies the service as the notification.

13. The method of claim 12 wherein the service fragment links to an access fragment.

14. The method of claim 13 wherein the access fragment provides a description of the transmission of the notification.

15. The method of claim 7 wherein the access type parameter identifies the notification as a component of the service.

16. The method of claim 7, the electronic service guide fragment further including a first parameter for declaring the notification in a notification channel and for declaring a port associated with the service.

17. The method of claim 16 wherein the first parameter is declared in a Service Guide Delivery Descriptor.

18. Computer executable instructions, which when executed by computing apparatus causes the apparatus to perform the method of any of claims 7 to 17.

19. An apparatus comprising:
a receiver (500) configured to receive an electronic service guide fragment (340), the receiver including:
a receiver input (501) configured to receive the electronic service guide fragment,
a parser (502) configured to identify a service fragment type parameter for instantiating the electronic service guide fragment as corresponding to a notification service if the notification is the service and an access fragment type parameter for declaring the electronic service guide fragment as corresponding to an access of a notification service if the notification is a component of the service, and
a processor (503) configured to process a service corresponding to the electronic service guide fragment as a notification.

20. A system comprising:
the apparatus of any of claims 1 to 6; and
a receiver (500) configured to receive the electronic service guide fragment, the receiver including:
a receiver input (501) configured to receive the electronic service guide fragment,
a parser (502) configured to identify the service fragment type parameter and the access fragment type parameter, and
a processor (503) configured to process a service corresponding to the electronic service guide fragment as a notification.

21. The system of claim 20 wherein the parameter for determining reception information for the notification includes a notification port parameter for determining a port corresponding to the destination of the notification information.

22. The system of claim 20 wherein the parameter for determining reception information for the notification includes a notification address parameter for identifying an IP multicast address for notification delivery.

23. The system of any of claims 20 to 22 wherein the service fragment type parameter identifies the service as a notification.

24. The system of claim 23 wherein the service fragment links to an access fragment to provide a description of the transmission of the notification.

25. The system of any of claims 20 to 24 wherein the access fragment type parameter identifies the notification as a component of the service.

26. A method comprising:
receiving an electronic service guide fragment,
identifying a service fragment type parameter for instantiating the electronic service guide fragment as corresponding to a notification service if the notification is the service and an access fragment type parameter for declaring the electronic service guide fragment as corresponding to an access of a notification service if the notification is a component of the service, and
processing a service corresponding to the electronic service guide fragment as a notification.

## Patentansprüche

1. Vorrichtung (600), die Folgendes umfasst:
einen Eingang (601), der konfiguriert ist, Daten, die in ein elektronisches Dienstleitfragment (340) zur Übertragung eingefügt werden sollen, zu empfangen;
ein Kennungsmodul (602), das konfiguriert ist, zu bestimmen, dass eine Meldung, die dem elektronischen Dienstleitfragment zugeordnet ist, Teil eines Meldungsdienstes ist;
eine elektronische Dienstleitfragmentzusammensetzungsvorrichtung (603), die konfiguriert ist:
das Dienstleitfragment mit einem Dienstfragment zusammenzusetzen, wobei das Dienstfragment einen Dienstfragmenttypparameter zum Instanziieren des elektronischen Dienstleitfragments als einem Meldungsdienst entsprechend, wenn die Meldung der Dienst ist, enthält; und
konfiguriert ist, das elektronische Dienstleitfragment mit einem Zugangsfragment zusammenzusetzen, wobei das Zugangsfragment einen Zugangsfragmenttypparameter zum Deklarieren des elektronischen Dienstleitfragments als einem Zugang eines Meldungsdienstes entsprechend, wenn die Meldung eine Komponente des Dienstes ist, enthält; und
einen Ausgang (605) zum Übertragen des elektronischen Dienstleitfragments zu dem Ziel,
wobei das elektronische Dienstleitfragment einen Parameter zum Bestimmen von Empfangsinformationen für die Meldung enthält.

2. Vorrichtung nach Anspruch 1, wobei der Parameter zum Bestimmen der Empfangsinformationen für die Meldung einen Meldungsportparameter zum Bestimmen eines Ports, der dem Ziel der Meldungsinformationen entspricht, enthält.

3. Vorrichtung nach Anspruch 1, wobei der Parameter zum Bestimmen von Empfangsinformationen für die Meldung einen Meldungsadressparameter zum Identifizieren einer IP-Gruppenrufadresse für die Meldungszustellung enthält.

4. Vorrichtung nach einem der vorhergehenden Ansprüche, wobei der Dienstfragmenttypparameter den Dienst als eine Meldung identifiziert.

5. Vorrichtung nach Anspruch 4, wobei sich das Dienstfragment mit einem Zugangsfragment verbindet, um eine Beschreibung der Übertragung der Meldung bereitzustellen.

6. Vorrichtung nach einem der vorhergehenden Ansprüche, wobei der Zugangsfragmenttypparameter die Meldung als eine Komponente des Dienstes identifiziert.

7. Verfahren, das Folgendes umfasst:
Bestimmen, dass eine Meldung, die einem elektronischen Dienstleitfragment (340) zugeordnet ist, Teil eines Meldungsdienstes ist;
Zusammensetzen eines elektronischen Dienstleitfragments, das einem Dienst entspricht, das Folgendes enthält:
Bereitstellen eines Dienstfragments und
Bereitstellen eines Zugangsfragments,
wobei das Dienstfragment einen Dienstfragmenttypparameter zum Instanziieren des elektronischen Dienstleitfragments als einem Meldungsdienst entsprechend, wenn der Dienst die Meldung ist, enthält und wobei das Zugangsfragment einen Zugangsfragmenttypparameter zum Deklarieren des elektronischen Dienstleitfragments als entsprechend einem Zugang eines Meldungsdienstes, wenn die Meldung eine Komponente des Dienstes ist, enthält; und
Ausgeben des elektronischen Dienstleitfragments.

8. Verfahren nach Anspruch 7, wobei das elektronische Dienstleitfragment einen Dienstleitzustelldeskriptorparameter zum Bestimmen eines Ziels der Meldung enthält.

9. Verfahren nach Anspruch 8, wobei der Dienstleitzustelldeskriptorparameter einen Meldungsempfangsparameter zum Bereitstellen von Informationen über die Meldung für das Ziel enthält.

10. Verfahren nach Anspruch 9, wobei der Meldungsempfangsparameter einen Meldungsportparameter zum Bestimmen eines Ports, der dem Ziel der Meldungsinformationen entspricht, enthält.

11. Verfahren nach Anspruch 9, wobei der Meldungsempfangsparameter einen Meldungsadressparameter zum Identifizieren einer IP-Gruppenrufadresse zur Meldungszustellung enthält.

12. Verfahren nach Anspruch 7, wobei der Dienstfragmenttypparameter den Dienst als die Meldung identifiziert.

13. Verfahren nach Anspruch 12, wobei sich das Dienstfragment mit einem Zugangsfragment verbindet

14. Verfahren nach Anspruch 13, wobei das Zugangsfragment eine Beschreibung der Übertragung der Meldung bereitstellt.

15. Verfahren nach Anspruch 7, wobei der Zugangstypparameter die Meldung als eine Komponente des Dienstes identifiziert.

16. Verfahren nach Anspruch 7, wobei das elektronische Dienstleitfragment ferner einen ersten Parameter zum Deklarieren der Meldung in einem Meldungskanal und zum Deklarieren eines Ports, der dem Dienst zugeordnet ist, enthält.

17. Verfahren nach Anspruch 16, wobei der erste Parameter in einem Dienstleitzustelldeskriptor deklariert ist.

18. Computerausführbare Anweisungen, die dann, wenn sie durch eine Computervorrichtung ausgeführt werden, bewirken, dass die Vorrichtung das Verfahren nach einem der Ansprüche 7 bis 17 ausführt.

19. Vorrichtung, die Folgendes umfasst:
einen Empfänger (500), der konfiguriert ist, ein elektronisches Dienstleitfragment (340) zu empfangen, wobei der Empfänger Folgendes umfasst:
einen Empfängereingang (501), der konfiguriert ist, das elektronische Dienstleitfragment zu empfangen,
einen Parser (502), der konfiguriert ist, einen Dienstfragmenttypparameter zum Instanziieren des Dienstleitfragments als einem Meldungsdienst entsprechend, wenn die Meldung der Dienst ist, und einen Zugangsfragmenttypparameter zum Deklarieren des elektronischen Dienstleitfragments als einem Zugang eines Meldungsdienstes entsprechend, wenn die Meldung eine Komponente des Dienstes ist, zu identifizieren und
einen Prozessor (503), der konfiguriert ist, einen Dienst, der dem elektronischen Dienstleitfragment entspricht, als eine Meldung zu verarbeiten.

20. System, das Folgendes umfasst:
die Vorrichtung nach einem der Ansprüche 1 bis 6; und
einen Empfänger (500), der konfiguriert ist, das elektronische Dienstleitfragment zu empfangen, wobei der Empfänger Folgendes enthält:
einen Empfängereingang (501), der konfiguriert ist, das elektronische Dienstleitfragment zu empfangen,
einen Parser (502), der konfiguriert ist, den Dienstfragmenttypparameter und den Zugangsfragmenttypparameter zu identifizieren, und
einen Prozessor (503), der konfiguriert ist, einen Dienst, der dem elektronischen Dienstleitfragment entspricht, als eine Meldung zu verarbeiten.

21. System nach Anspruch 20, wobei der Parameter zum Bestimmen von Empfangsinformationen für die Meldung einen Meldungsportparameter zum Bestimmen eines Ports, der dem Ziel der Meldungsinformationen entspricht, enthält.

22. System nach Anspruch 20, wobei der Parameter zum Bestimmen von Empfangsinformationen für die Meldung einen Meldungsadressparameter zum Identifizieren einer IP-Gruppenrufadresse für die Meldungszustellung enthält.

23. System nach einem der Ansprüche 20 bis 22, wobei der Dienstfragmenttypparameter den Dienst als eine Meldung identifiziert.

24. System nach Anspruch 23, wobei sich das Dienstfragment mit einem Zugangsfragment verbindet, um eine Beschreibung der Übertragung der Meldung bereitzustellen.

25. System nach einem der Ansprüche 22 bis 24, wobei der Zugangsfragmenttypparameter die Meldung als eine Komponente des Dienstes identifiziert.

26. Verfahren, das Folgendes umfasst:
Empfangen eines elektronischen Dienstleitfragments,
Identifizieren eines Dienstfragmenttypparameters zum Instanziieren des elektronischen Dienstleitfragments als einem Meldungsdienst entsprechend, wenn die Meldung der Dienst ist, und einen Zugangstypparameter zum Deklarieren des elektronischen Dienstleitfragments als einem Zugang eines Meldungsdienstes entsprechend, wenn die Meldung eine Komponente des Dienstes ist, und
Verarbeiten eines Dienstes, der dem elektronischen Dienstleitfragment entspricht, als eine Meldung.

## Revendications

1. Appareil (600) comprenant :
une entrée (601) configurée pour recevoir des données à inclure dans un fragment de guide de service électronique (340) à transmettre ;
un module identificateur (602) configuré pour déterminer qu'une notification associée au fragment de guide de service électronique fait partie d'un service de notification ;
un assembleur de fragment de guide de service électronique (603) configuré :
pour assembler le fragment de guide de service électronique avec un fragment de service, le fragment de service comportant un paramètre de type de fragment de service pour instancier le fragment de guide de service électronique comme correspondant à un service de notification si la notification est le service ; et
configuré pour assembler le fragment de guide de service électronique avec un fragment d'accès, le fragment d'accès comportant un paramètre de type de fragment d'accès pour déclarer le fragment de guide de service électronique comme correspondant à un accès d'un service de notification si la notification est une composante du service ; et
une sortie (605) pour transmettre le fragment de guide de service électronique à la destination, dans lequel le fragment de guide de service électronique comporte un paramètre pour déterminer des informations de réception pour la notification.

2. Appareil selon la revendication 1, dans lequel le paramètre de détermination d'informations de réception pour la notification comporte un paramètre de port de notification pour déterminer un port correspondant à la destination des informations de notification.

3. Appareil selon la revendication 1, dans lequel le paramètre de détermination d'informations de réception pour la notification comporte un paramètre d'adresse de notification pour identifier une adresse de multidiffusion IP pour la délivrance de la notification.

4. Appareil selon l'une quelconque des revendications précédentes, dans lequel le paramètre de type de fragment de service identifie le service comme une notification.

5. Appareil selon la revendication 4, dans lequel le fragment de service se lie à un fragment d'accès pour fournir une description de la transmission de la notification.

6. Appareil selon l'une quelconque des revendications précédentes, dans lequel le paramètre de type de fragment d'accès identifie la notification comme composante du service.

7. Procédé comprenant :
la détermination qu'une notification associée à un fragment de guide de service électronique (340) fait partie d'un service de notification ;
l'assemblage d'un fragment de guide de service électronique correspondant à un service, comportant :
la fourniture d'un fragment de service, et
la fourniture d'un fragment d'accès,
dans lequel le fragment de service comporte un paramètre de type de fragment de service pour instancier le fragment de guide de service électronique comme correspondant à un service de notification si le service est la notification ;
et dans lequel le fragment d'accès comporte un paramètre de type de fragment d'accès pour déclarer le fragment de guide de service électronique comme correspondant à un accès d'un service de notification si la notification est une composante du service ; et
la production en sortie du fragment de guide de service électronique.

8. Procédé selon la revendication 7, dans lequel le fragment de guide de service électronique comporte un paramètre de Descripteur de Délivrance de Guide de Service pour déterminer une destination de la notification.

9. Procédé selon la revendication 8, dans lequel le paramètre de Descripteur de Délivrance de Guide de Service comporte un paramètre de réception de notification pour fournir des informations relatives à la notification à la destination.

10. Procédé selon la revendication 9, dans lequel le paramètre de réception de notification comporte un paramètre de port de notification pour déterminer un port correspondant à la destination des informations de notification.

11. Procédé selon la revendication 9, dans lequel le paramètre de réception de notification comporte un paramètre d'adresse de notification pour identifier une adresse de multidiffusion IP pour la délivrance de la notification.

12. Procédé selon la revendication 7, dans lequel le paramètre de type de fragment de service identifie le service comme la notification.

13. Procédé selon la revendication 12, dans lequel le fragment de service se lie à un fragment d'accès.

14. Procédé selon la revendication 13, dans lequel le fragment d'accès fournit une description de la transmission de la notification.

15. Procédé selon la revendication 7, dans lequel le paramètre de type d'accès identifie la notification comme composante du service.

16. Procédé selon la revendication 7, le fragment de guide de service électronique comportant en outre un premier paramètre pour déclarer la notification dans un canal de notification et pour déclarer un port associé au service.

17. Procédé selon la revendication 16, dans lequel le premier paramètre est déclaré dans un Descripteur de Délivrance de Guide de Service.

18. Instructions exécutables par ordinateur, lesquelles, lorsqu'elles sont exécutées par un appareil informatique, amènent l'appareil à exécuter le procédé selon l'une quelconque des revendications 7 à 17.

19. Appareil comprenant :
un récepteur (500) configuré pour recevoir un fragment de guide de service électronique (340),
le récepteur comportant :
une entrée de récepteur (501) configurée pour recevoir le fragment de guide de service électronique,
un analyseur syntaxique (502) configuré pour identifier un paramètre de type de fragment de service pour instancier le fragment de guide de service électronique comme correspondant à un service de notification si la notification est le service et un paramètre de type de fragment d'accès pour déclarer le fragment de guide de service électronique comme correspondant à un accès d'un service de notification si la notification est une composante du service ; et
un processeur (503) configuré pour traiter un service correspondant au fragment de guide de service électronique comme notification.

20. Système comprenant :
l'appareil selon l'une quelconque des revendications 1 à 6 ; et
un récepteur (500) configuré pour recevoir le fragment de guide de service électronique, le récepteur comportant :
une entrée de récepteur (501) configurée pour recevoir le fragment de guide de service électronique,
un analyseur syntaxique (502) configuré pour identifier le paramètre de type de fragment de service et le paramètre de type de fragment d'accès, et
un processeur (503) configuré pour traiter un service correspondant au fragment de guide de service électronique comme une notification.

21. Système selon la revendication 20, dans lequel le paramètre de détermination d'informations de réception pour la notification comporte un paramètre de port de notification pour déterminer un port correspondant à la destination des informations de notification.

22. Système selon la revendication 20, dans lequel le paramètre de détermination d'informations de réception pour la notification comporte un paramètre d'adresse de notification pour identifier une adresse de multidiffusion IP pour la délivrance de la notification.

23. Système selon l'une quelconque des revendications 20 à 22, dans lequel le paramètre de type de fragment de service identifie le service comme une notification.

24. Système selon la revendication 23, dans lequel le fragment de service se lie à un fragment d'accès pour fournir une description de la transmission de la notification.

25. Système selon l'une quelconque des revendications 20 à 24, dans lequel le paramètre de type de fragment d'accès identifie la notification comme une composante du service.

26. Procédé comprenant :
la réception d'un fragment de guide de service électronique,
l'identification d'un paramètre de type de fragment de service pour instancier le fragment de guide de service électronique comme correspondant à un service de notification si la notification est le service et un paramètre de type de fragment d'accès pour déclarer le fragment de guide de service électronique comme correspondant à un accès d'un service de notification si la notification est une composante du service ; et
le traitement d'un service correspondant au fragment de guide de service électronique comme notification.
